# EUROPÄISCHE PATENTSCHRIFT

(11) **EP 2 160 662 B1**
(45) Veröffentlichungstag und Bekanntmachung des Hinweises auf die Patenterteilung: **10.08.2011**
(21) Anmeldenummer: 08773539.5
(22) Anmeldetag: 20.06.2008
(51) Int. Cl.: G05B 19/402, G05B 19/404

(54) **VERFAHREN ZUR OPTIMIERTEN BEWEGUNGSKOORDINATION VON MESS- ODER WERKZEUGMASCHINEN MIT REDUNDANTEN TRANSLATORISCH WIRKSAMEN ACHSEN**
METHOD FOR THE OPTIMISED MOVEMENT CO-ORDINATION OF MEASURING TOOLS OR MACHINE-TOOLS BY MEANS OF REDUNDANT TRANSLATORY AXLES
PROCÉDÉ DESTINÉ À OPTIMISER LA COORDINATION DE MOUVEMENTS D'APPAREILS DE MESURE OU DE MACHINES-OUTILS AU MOYEN D'AXES DE TRANSLATION REDONDANTS

(30) Priorität: 22.06.2007 DE 102007028934
(43) Veröffentlichungstag der Anmeldung: 10.03.2010
(73) Patentinhaber: TRUMPF Werkzeugmaschinen GmbH + Co. KG, 71254 Ditzingen (DE)
(72) Erfinder: EHLERDING, Andreas, 30926 Seelze (DE)
(74) Vertreter: Kohler Schmid Möbus
(86) Internationale Anmeldenummer: PCT/EP2008/004966
(87) Internationale Veröffentlichungsnummer: WO 2009/000466

(56) Entgegenhaltungen:
- EP-A- 1 294 544
- EP-A- 1 688 807
- DE-A1- 4 123 323
- US-A- 5 801 939

## Beschreibung

In der Entwicklung von Mess- und Werkzeugmaschinen kommt es zunehmend zum Einsatz von redundanten translatorisch wirksamen Achsen, also Achsen, die aufeinander aufbauend oder gegeneinander wirksam, parallel im Raum zueinander bewegbar sind, wobei ein oder mehrere Zusatzachsen mit einem relativ kurzen Bewegungsspielraum auf oder gegenüber von Basisachsen, mit einem relativ langen Bewegungsspielraum angeordnet sind.

Solche redundant in gleicher Richtung überlagert bewegbare Achsen, bieten die Möglichkeit den größeren Bewegungsspielraum der Basisachsen mit den höheren Beschleunigungsmöglichkeiten kurzwegiger und damit leichter gebauter Zusatzachsen, in einem kontinuierlichen Bewegungsablauf einer Messeinrichtung oder eines Werkzeuges, relativ zu einem Mess- oder Bearbeitungsgut, zu kombinieren.

Ein Beispiel für ein derartiges Konzept ist das Patent EP 594 699 B1 (Ehlerding). In besagtem Patent wurde vorgeschlagen, parallel ausgerichtete überlagert wirksame Achsanordnungen zu nutzen, um die hohen Beschleunigung leichter kurzwegiger Achsen im gesamten Arbeitsraum weniger beschleunigbarer, langwegiger Achsen, in solchen Werkzeugmaschinen zu ermöglichen, die vorzugsweise für eine Bearbeitung von flächigen oder flachen Werkstücken in zwei oder drei orthogonal zueinander ausgerichteten Achsen ausgelegt sind.

Aus dieser Veröffentlichung ist bekannt, dass hier als Zusatzachsen bezeichnete kürzere Teilachsen von einem über dem Material bewegbaren Portal mit einer die Zusatzachsen tragender Bewegungseinheit, die sich wiederum an dem Portal entlang bewegt, getragen sein können, oder mittels Basisachsen auch das Material bewegt werden kann, wobei sich ein Werkzeug mittels Zusatzachsen nochmals unabhängig von der Bewegung durch die Basisachsen, gegenüber dem Material bewegen kann.

Genauso ist auch vorstellbar ein oder mehrere Zusatzachsen, die ein Werkzeug tragen, an einem festen Portal entlang, als einer Basisachse, über das Material zu bewegen, während das Material mittels einer weiteren orthogonal zum Portal orientierten Basisachse unter dem Portal entlang bewegt wird.

Allgemein ist bekannt, dass anstatt eines Portales auch eine Traverse oder ein bewegbarer oder stationärer Arm oder Ausleger mit bewegter oder stationärer Stütze als Träger von Zusatzachsen dienen kann und dass alle genannten Achskonfigurationen auch abweichend vom üblichen Fall, in dem die Basisachsen vorzugsweise die schweren Maschinenteile oder das schwere Mess- oder Bearbeitungsgut in der horizontalen Ebene bewegen, auch eine andere Orientierung im Raum besitzen können.

Statt der Messeinrichtungen oder Werkzeuge kann auch leichtes oder kleines Mess- oder Bearbeitungsgut durch die Zusatzachsen getragen und durch gemeinsame Bewegung von Basis- und Zusatzachsen entlang von Messeinrichtungen oder Werkzeugen geführt werden, ohne dass hierzu eine grundlegend andere Koordination erforderlich wäre.

Beispielsweise aus WO 2006/75209 A2 (Gattiglio et al) ist zudem bekannt, dass Zusatzachsen zwar physisch ortohogonal zueinander ausgerichtet sind, und sich gemeinsam in einer Ebene bewegen, die an zwei Basisachsen ausgerichtet ist, jedoch so, dass die physischen Zusatzachsen in dieser Bewegungsebene nicht parallel zu den Basisachsen ausgerichtet sind, beispielsweise, wie in WO 2006/75209 A2, um 45° gegenüber den Basisachsen in der gemeinsamen Bewegungsebene gedreht.

Eine redundante, parallel ausgerichtete Wirkung der Achsen ist grundsätzlich auch hier leicht zu implementieren, da die hierzu notwendige feste Transformation zwischen den Ausrichtungen von zwei an den physischen Achsrichtungen orientierten kartesischen Koordinatensystemen, mittels simpelster konstant wirkender analoger, digitaler oder computertechnisch berücksichtigter Muttiplikationselemente, problemlos auch für den durchschnittlichen Fachmann vorzusehen ist.

Weiterhin ist aus dem Stand der Technik bekannt, dass anstelle linear bewegter Zusatzachsen, auch der Einsatz rotorisch um einen meist geringen Winkelbetrag bewegbarer Einrichtungen möglich ist, so dass mittels eines ausreichenden Abstandes zwischen Drehpunkt und Mess- oder Bearbeitungspunkt, eine ausreichend angenähert lineare Bewegung der für die Messung oder Bearbeitung relevanten Elemente einer Messeinrichtung oder eines Werkzeuges entsteht. Eine Variante hiervon wird genutzt, wenn gebündelte Strahlungsenergie, meist ein Laserstrahl, mittels schwenkbarer Spiegel oder anderer Ablenkungselemente auf eine Bearbeitungsstelle gelenkt wird.

Zusatzachsen in diesem Sinne werden beispielsweise in dem Dokument WO 96/29634 A1 (Cutler et al) ausführlich behandelt, siehe illustrativ hierzu besonders Fig. 2 und Fig. 4 dort.

Ähnliche mechanische Verhältnisse betreffend der Zusatzachsen sind auch für andere Werkzeuge denkbar, beispielsweise rotierbare Fräsköpfe, oder entsprechende Messeinrichtungen, wobei oft zusätzlich eine Bewegung längs der Werkzeug- oder beispielsweise einer Meßtasterachse möglich ist, auch zur Kompensation der Abweichung von einer zur jeweiligen Basisachse exakt parallelen Bewegung.

In der Patentschrift EP 1 294 544 B1 (Sartorio) wird eine weitere Konfiguration gezeigt und als eine Neuerung gegenüber dem früheren Stand der Technik eine zweiachsig linear bewegbare parallelkinematische Zusammenfassung der hoch beschleunigbaren Zusatzachsen gelehrt, was insbesondere zu dem Vorteil führt, dass in beiden horizontalen Hauptbewegungsrichtungen einer derart realisierten Maschine insoweit vergleichbare kinematische Verhältnisse herrschen, was die Effizienz einer zweidimensionalen Werkzeugbewegung verbessern kann.

Über die praktische Koordination der simultan betriebenen Achsen wird jedoch wenig offenbart. Lediglich einige wesentliche Rahmenbedingungen werden genannt, die bei der Koordination der Teilachsen gelten sollen.

Ab Satz [24] bis Satz [39] der Beschreibung und im Hauptanspruch wird im Patent EP 1 294 544 B1 hierzu etwas ausgeführt.

Die einzigen Informationen, die aus diesem Abschnitt der Beschreibung zu entnehmen sind, ergeben die Lehre, dass die Maximalgeschwindigkeit der Basisachsen wesentlich höher sein müsse als die Werkzeuggeschwindigkeit, und dass es möglich sei aus den genannten Bedingungen und der Voraussetzung bekannter Maschinendaten die notwendigen Gleichungen aufzustellen, um die noch unbekannten Maschinendaten zu ermitteln.

Offenbar auf dieser noch unvollständigen Lehre aufbauend, wird in EP 1 758 003 A1 (Cardinale et al) zunächst eine Koordination der Achsen vorgeschlagen, die nach dem Prinzip der inversen Kinematik die redundanten Freiheitsgrade einer Bewegungsmechanik durch Anwendung einer speziellen Form der sogenannten Jacobi-Matrix in optimierter Weise nutzbar machen soll. Alle Bemerkungen hierzu sind so allgemein gehalten, dass noch nicht einmal hinreichend deutlich wird, wie wichtig konkrete einschränkende Bedingungen in einem derartigen Verfahren wären, geschweige denn welche Bedingungen hierzu wesentlich dafür wären, um überhaupt eindeutige und praktisch nutzbare Lösungen zu Koordination der Achsen zu erhalten.

In der weiteren Beschreibung, den Beispielen und Patentansprüchen wird hierzu dann auch kein konkreter Bezug mehr hergestellt, obwohl beispielsweise grundsätzlich bei allen hinreichend konkretisierten Anwendungsbeispielen, insbesondere auch der behandelten Laserschneidmaschine, eine entsprechende Darstellung möglich - wenn auch nicht notwendig - wäre.

Soweit dies dazu dienen sollte, um damit die Anwendbarkeit der beanspruchten Erfindung auch für komplexer konfigurierte Systeme anzudeuten, beispielsweise auch für rotatorische Achsen, oder auch redundant wirksame rotatorische Achsen, so ist dies jedoch nicht in einer Weise geschehen, die - ohne weitere erfinderische Schritte - eine Anwendbarkeit überhaupt ermöglicht.

Gegenüber dem bekannten Stand der Technik wird tatsächlich auch nichts offenbart, was dem Fachmann nicht schon bekannt wäre.

Erstens ist eine Bewegungsaufteilung auf redundant wirksame Achsen durch Filterung keinesfalls eine Neuheit und dass dabei die Zusatzachsen als Bewegung die Differenz zwischen Gesamtbewegung und der Bewegung der Basisachsen ausführen (sollen), nicht wirklich überraschend.

Ansonsten wird noch wiederholt, was sinngemäß schon in EP 1 294 544 B1 zu lesen war: Die Maximalgeschwindigkeit der Basisachsen sollte deutlich höher gewählt sein, als die der Zusatzachsen.

(Siehe EP 1 758 003 A1, Beschreibung, Satz 32 und Anspruch 9)

Soweit überhaupt konkret nachvollziehbar, da auch unklar bleibt, wie nicht nur Beschleunigungs- oder Amplitudenanteile einer Bewegung, sondern gleich ganze Konturen oder einzelne Abschnitte "gefiltert" werden sollen, entspricht dies letztlich also nur dem Stand der Technik, beispielsweise aus EP 594 699 B1, wenn auch in einer Ausdehnung der Ansprüche auf praktisch jede Art von regelbarer physikalischer Größe, die hier jedoch nicht weiter von Interesse sein muss.

Aufgeführt wird es als Stand der Technik hier dennoch, weil es genau diesen, zu einer der zu lösenden Problemstellungen, exemplarisch dokumentiert: Als ein Aspekt der hier vorliegenden Erfindung soll auch beschrieben werden, wie die effiziente Bewegungsausführung von Zusatzachsen an einer Anzahl kleinerer Konturen, innerhalb einer umfangreicheren Gesamtbearbeitung, besonders effizient koordinierbar ist.

EP 1 758 003 A1 bietet hierzu an, diese zu "filtern", was jedoch für in sich jeweils abgeschlossene Konturen keine nachvollziehbare technische Lehre darstellt, aber im Zusammenhang mit der Verwendung synchron redundant wirksamen Achsen sehr deutlich den Bedarf für eine entsprechende Lösung zeigt, die so allgemein anwendbar wäre, wie das Wort "Filter" klingt und dabei eine effiziente Koordination der Achsbewegungen bietet.

Eine relativ einfache denkbare Variante hierzu, die jedoch weniger geeignet ist das Potential synchron redundant wirkender Achsen zu nutzen, da ausdrücklich auf eine alternierende Benutzung von Basis- und Zusatzachsen bezogen, wird in EP 1 366 846 B1 (Leibinger et al) beschrieben. Siehe insbesondere Fig. 9 dort.

Entsprechend wird also nach dem Stand der Technik davon ausgegangen, dass dem Fachmann bekannt ist, wie eine separate Kontur innerhalb einer Gesamtbearbeitung gekennzeichnet, ermittelt und in ihren Abmessungen bestimmt wird.

Tatsächlich sind dem Fachmann eine große Zahl von Varianten hierzu bekannt oder ohne Schwierigkeiten vorstellbar, die überwiegend letztlich auf eine zumindest vereinfachte Vorabsimulation der Bearbeitung hinauslaufen, die mittels Minimal-, Maximalwerterhebungen in allen relevanten Maschinenachsen die Position und Abmessungen einzelner abgeschlossener Bewegungsbahnen bestimmen und die so gewonnenen Daten, beispielsweise mittels einem speziellen Code oder als Kommentar dem generierten CNC-Programm eines bestimmten Abschnittes zuordnen. Genauso ist auch denkbar, dass solche Schritte im Rahmen einer Vorverarbeitung erst in einer Steuerung stattfinden, wo dann die gewonnenen Werte meist nur temporär im Speicher der Steuerung abgelegt und genutzt werden. Dass entsprechende Daten über separierbare Konturen vorliegen können, darf also nach dem Stand der Technik wohl vorausgesetzt werden.

Doch obwohl somit leicht verständlich wird, wie man sich die Koordination der Basis- und Zusatzachsen in EP 1 366 846 B1 vorstellen darf, bleibt dies in EP 1 758 003 A1 bezüglich einzelner Konturen völlig im Dunkeln, wenn man nicht davon ausgeht, dass es sich um ein ähnliches Verfahren wie in EP 1 366 846 B1 handelt, also 1. Erkennen einer geeigneten Teilkontur, 2. ggf. Positionieren der Basisachsen auf eine geeignete Ausgangsposition, 3. Ausführen der erkannten Teilkontur mittels der Zusatzachsen.

Wenn man des weiteren eine aus Gründen der Effizienz überlagert koordinierte Bewegung zu und von diesen erkannten Teilkonturen vorsieht, also derart dass auch eine Anpassung der Zusatzachsen an ihre jeweilige Anfangsposition, oder vielleicht auch Anfang oder Rest einer Bearbeitung mittels oder mit Hilfe der Zusatzachsen ausgeführt wird, noch oder schon während sich die Basisachsen bewegen, kann dies mit dem Begriff "Filtern" und vagen Andeutungen, man möge sich bei Problemen der Jacobi-Matrix bedienen, sicher nicht für den Fachmann als nachvollziehbar umschrieben gelten - ganz unabhängig von der Frage der Neuheit.

In einer kürzlich eingereichten Patentanmeldung des Anmelders der vorliegenden Erfindung, wird eine Variante von redundant translatorisch wirksamen Achsanordnungen beschrieben, die einem Erkennen solcher durch die Zusatzachsen zu behandelnden Teilkonturen grundsätzlich nicht bedarf, da mittels der dort vorgeschlagenen Auslegung von Maschinen oder einem entsprechenden Verfahren, jede beliebige Kontur ohne irgend eine notwendige Differenzierung mit der maximal möglichen Beschleunigung der Zusatzachsen abgearbeitet werden kann. (im folgenden Verfahren 1 genannt)

Eine weitere zuvor eingereichte Patentanmeldung des Anmelders der vorliegenden Erfindung beschreibt ein Verfahren, um auch für weniger passend ausgelegte Maschinen zumindest eine erheblich verbesserte Verwendbarkeit der Zusatzachsen mit einer möglichst hohen Beschleunigung zu erreichen. Auch dieses Verfahren zur Optimierung der Achskoordination kommt ohne die Aufteilung einer Gesamtmessung oder -bearbeitung in separate Teilkonturen aus. (im folgenden Verfahren 2 genannt)

Jedoch lässt sich, im Gegensatz zu Verfahren 1 (das nicht auf jeder Maschine oder nicht immer mit den notwendigen Geschwindigkeiten anwendbar ist) mit dem Verfahren 2 nicht die Koordination der Achsen für jede beliebige Kontur praktisch gleich effizient erreichen.

Insbesondere wenn viele kleinere Teilkonturen über eine größere Fläche verteilt sind, kann mit Verfahren 2 nicht grundsätzlich eine automatisch hochoptimierte Koordination der Achsen garantiert werden, so dass selbst das sehr viel simplere Verfahren aus EP 1 366 846 B1 in solchen speziellen Fällen zumindest ähnlich effizient sein kann.

Wo beide dieser Verfahren (Verfahren 2 und EP 1 366 846 B1) jedoch besonders ungünstig abschneiden, ist die enge Verteilung vieler separat zu behandelnder Konturen; da Verfahren 2 diese Konturen nicht differenziert zu erkennen und behandeln vermag und EP 1 366 846 B1 nicht in der Lage ist die häufigen Positionswechsel der Basisachsen zeitlich mit einem kinematisch durchaus möglichen Beginn oder Ende einer Teilbehandlung zu überlagern.

Wenn auch aus dem Stand der Technik sehr wohl die Überlagerung von zwei grundsätzlichen Bewegungen, beispielsweise das mitlaufende Aufbringen einer Kontur während einer gleichzeitigen gleichmäßigen Transportbewegung, bekannt ist, so ist dies jedoch als solches nur dann relativ problemlos anzuwenden, wenn die Zeit der Einzelkonturbehandlung mittels Zusatzachsen, zum Beispiel eines beschriftenden Laserscanners, sehr kurz ist, im Vergleich zum Durchgang des entsprechenden Bereiches durch den Bewegungsspielraum der Zusatzachsen. Die überlagerte schnelle Bewegung kann dann der konstanten Hauptbewegung problemlos aufsynchronisiert werden - ein durchaus übliches Verfahren, das aber dennoch in seiner Anwendung kaum ohne spezielle Vorplanung auskommt.

Was bei der vorliegenden Problemstellung jedoch gefordert wird, entspricht einem nahezu pausenlosen Durchlauf von Teilen mit verschiedenen Beschriftungen, mit unterschiedlichem Zeitbedarf und in unterschiedlichen Größen, wobei die Transportbewegung wiederum hierzu angepasst werden muss, bis hin zur temporären Bewegungsumkehr - und das ganze gewöhnlich in zwei Dimensionen - also etwas, was sich auch vom schon etwas versierteren Fachmann, nicht aus den aktuell verfügbaren Automatisierungsbaukästen moderner Steuerungen planmäßig zusammenfügen lässt.

Eine entsprechende, vielseitiger einsetzbare Lösung, ist bisher nicht bekannt.

Neben diesen Einschränkungen einer optimalen Bewegungskoordination an zahlreichen eng beieinander befindlichen kleinen Teilkonturen, existiert noch ein weiteres Problem für viele Mess- oder Bearbeitungsmaschinen mit redundanten translatorisch wirksamen Achsen:

Der bisherige Stand der Technik geht, soweit die zugrundeliegende Problematik überhaupt behandelt wird, davon aus, dass nach jeder hochbeschleunigten Bewegung die entsprechend voreilenden Zusatzachsen schließlich wieder von den Basisachsen eingeholt werden, so dass sich die Zusatzachsen wieder in ihrer Ausgangsposition, gewöhnlich in der Mitte ihres jeweiligen Bewegungsspielraumes, befinden. Insbesondere für solche mechanischen Konfigurationen, bei denen ein oder mehrere Zusatzachsen mittels einer oder mehrerer Basisachsen über einer Mess- oder Bearbeitungsfläche bewegt werden, beispielsweise mittels eines Portales, entsteht somit ein Bereich am Rand des Gesamtbewegungsbereiches, mit etwa der halben Breite des Bewegungsspielraumes der Zusatzachsen, der regulär nicht erreichbar ist, so dass beispielsweise ein Portal, oder dessen Bewegungsbereich, entsprechend weiter sein müsste, um im wesentlichen den gleichen Arbeitsraum, wie ohne Zusatzachsen, nutzbar zu machen.

Dabei ist noch nicht berücksichtigt, dass bei einer Bewegungskoordination nach dem bisherigen Stand der Technik, die Basisachse sozusagen über die anzufahrende Position hinausschwingt, so dass eine völlig sichere Funktion einer derartig koordinierten Maschine nur innerhalb eines Bereiches möglich ist, der insgesamt dem Bewegungsspielraum der Basisachsen abzüglich dem zweifachen Bewegungsspielraum der jeweiligen Zusatzachsen entspricht. Dies erklärt sich aus der Tatsache, dass bei einer Bewegung zu einem Rand des Bewegungsbereiches jeweils der Bewegungsspielraum einer Zusatzachse in entgegengesetzte Richtung für die Kompensation des Bremsverlaufes benötigt wird, so dass beispielsweise das Werkzeug dann kurzzeitig an dem Rand der Zusatzachse steht, der sich gegenüber der äußeren Begrenzung befindet. Am Ende der Bewegung gleichen sich dann zwar Basis- und Zusatzachse aus - also die Basisachse kommt vom Rand zurück, damit sich die Zusatzachse wieder in ihre Ausgangsposition bewegen kann, während die Gesamtposition in dieser Achse konstant bleibt. Kurzzeitig ist daher aber auf jeder Seite des Gesamtbewegungsbereiches von Basis- und Zusatzachsen eine "Auslaufzone" von in etwa dem Bewegungsspielraum der Zusatzachse zu berücksichtigen, die nicht als Mess- oder Bearbeitungsraum nutzbar ist. Da die meisten Zusatzachsen zum synchronen redundant wirksamen Betrieb nach dem älteren Stand der Technik nur einen relativ kurzen Bewegungsspielraum benötigten, war dies bestenfalls ein eher untergeordnetes Problem. Da jedoch, entsprechend der Entwicklung der letzten Jahre, sich zunehmend die Erkenntnis durchsetzt, dass ein relativ großer minimaler Bewegungsspielraum für einen effizienten redundant wirksamen Betrieb notwendig ist, hat nun auch die Lösung dieses Teilproblemes der Gesamtkoordination, eine höhere Relevanz.

**Aufgabe der vorliegenden Erfindung** ist es daher, die Nachteile der bekannten Bewegungskoordinationsverfahren für redundant translatorisch wirksame Achsen einer Mess- oder Werkzeugmaschine zu vermeiden und ein Koordinationsverfahren zu offenbaren, dass die Möglichkeit bietet, den Bewegungsspielraum von Basis- und Zusatzachsen auch bei kontinuierlich überlagerter Bewegung der redundanten Achsen vollständig zu nutzen und in entsprechender Weiterbildung auch die sonstige Bewegungskoordination, insbesondere beim Abfahren zahlreicher eng aufeinander folgender relativ kleiner separater Teilkonturen, weiter verbessert.

### Beschreibung der Erfindung

Interessanterweise sind beide auf den ersten Blick recht unterschiedlichen Probleme mit Hilfe des selben Verfahrens lösbar, mit jeweils nur geringfügigen Anpassungen.

Um den Gesamtbewegungsspielraum von redundant translatorisch wirksamen Achsen auch bei kontinuierlich überlagerter Bewegung der Basis- und Zusatzachsen möglichst vollständig zu nutzen, ist gemäß dem Hauptanspruch der vorliegenden Erfindung vorgesehen, dass bei Annäherung einer Basisachse an eine der Grenzen ihres Bewegungsbereiches und der hierduch notwendigen Abbremsung ihrer Bewegung, bis hin zum Stillstand, der neutrale Ausgangspunkt einer redundant hierzu wirkenden Zusatzachse für weitere beschleunigte Bewegungen, entsprechend zum Rand des Bewegungsspielraumes besagter Basisachse hin verschoben wird, dem sich die Gesamtbewegung nähert. Besagter neutraler Ausgangspunkt kann auch als innerer oder lokaler Nullpunkt der jeweiligen Zusatzachse bezeichnet oder aufgefaßt werden, auf den die redundant zu den jeweiligen Basisachsen wirkenden, und in der Regel höher beschleunigten Bewegungsanteile, aufaddiert werden.

Besagte, der Gesamtbewegung überlagerte Verschiebung, die bezüglich der relativen Bewegung zwischen Messeinrichtung oder Werkzeug und dem Messoder Bearbeitungsgut insgesamt neutral erfolgt, besteht in einer entsprechenden Bewegungskomponente der besagten Zusatzachse zu ihrem besagten Rand hin, als Kompensation der Bewegungsverlangsamung, bis hin zum Stillstand, der jeweiligen Basisachse, je mehr sich Basisachse und jeweils zugehörige Zusatzachse dem Rand ihres Bewegungsspielraumes nähern.

Umgekehrt wird bei zunehmender Entfernung besagter Gesamtbewegung vom Rand des Gesamt-Bewegungsspielraumes, der lokale Nullpunkt der besagten Zusatzachse wieder in Richtung ihrer Mittelstellung verschoben, so dass die Basisachse schließlich wieder an der Bewegung teilnimmt, umso mehr, je näher zugleich die Vorgabe für den inneren Nullpunkt der Zusatzachse, ihrem neutralen Ausgangswert entspricht.

Eine Berechnung des minimal möglichen Abstandes (D) einer Basisachse vom Rand ihres Bewegungsspielraumes, in Abhängigkeit von der aktuellen Geschwindigkeit (Vb) dieser Basisachse und ihrer maximalen Beschleunigung (Bb) ist mit dem Ausdruck D >= Vb² / 2Bb möglich.

Umgestellt ergibt sich als maximal erlaubte Geschwindigkeit bei gegebenem Abstand (D) als Vb <= SQRT(2 D Bb). (SQRT = Quadratwurzel)

Diese Bedingung ist im wesentlichen einzuhalten, um trotz der Nutzung des Rändbereiches, als Teil des gewöhnlichen Arbeitsraumes einer Maschine, die Verletzung der Grenzen des Bewegungsspielraumes einer Basisachse, während einer Gesamtbewegung zu vermeiden.

Um andererseits den Randbereich des Arbeitsraumes auch bei hohen Messoder Bearbeitungsgeschwindigkeiten möglichst vollständig nutzen zu können, muss sich eine Basisachse auch entsprechend geschwindigkeitsabhängig der Grenze ihres Bewegungsspielraumes annähern.

Grundsätzlich gilt: Wenn Pb1 die vorgegebene Position der Basisachse nach dem bisherigen Stand der Technik wäre und Pb2 die sich aus der erfindungsgemäßen Abbremsung ergebende Position, so errechnet sich die Position des inneren Nullpunktes einer hierzu redundant wirkenden Zusatzachse entsprechend Nz2 + Pb2 = Nz1 + Pb1 zu Nz2 = Nz1 + Pb1 - Pb2

Somit kann die Koordination der redundant wirksamen Achsen grundsätzlich entsprechend einem früheren Stand der Technik erfolgen, nur mit den zusätzlichen Vorgaben, dass bei Annäherung der Basisachse an eine Grenze ihres Bewegungsspielraumes, ihre Geschwindigkeit auf das oben erläuterte Maß begrenzt wird, und der hierdurch ausfallende Bewegungsanteil, der redundant wirkenden Zusatzachse zugeschlagen wird.

Hierdurch wird der gesamte gemeinsam von Basis- und Zusatzachse, bei separater Ansteuerung, erreichbare Arbeitsraum, auch für den gemeinsamen Betrieb mit ständiger beschleunigungsabhängiger Aufteilung der Bewegung, verfügbar.

Zur Veranschaulichung ein einfaches Beispiel für eine einzelne Gesamtachse:

Zu Anfang dieser Betrachtung sei angenommen, dass sowohl die Basisachse, als auch die Zusatzachse auf den Mittelpunkt ihrer Bewegungsspielräume von jeweils 1000mm und 100mm positioniert sind und still stehen.

Dies sei auch der Nullpunkt des Arbeitsraumes.

Für eine Gesamtbewegung nach rechts (+) mit konstanter Sollgeschwindigkeit, beschleunigen nun beide Achstypen gleichzeitig, bis die besagte Geschwindigkeit erreicht wird. Bis zu diesem Zeitpunkt hat die Basisachse nur einen geringen Bruchteil der Sollgeschwindigkeit erreicht. Während die Basisachse nun weiter beschleunigt, nimmt die Geschwindigkeit der Zusatzachse entsprechend ab. Wenn die Geschwindigkeit der Basisachse die Sollgeschwindigkeit erreicht, steht die Zusatzachse, innerhalb ihres Bewegungsspielraumes, still und relativ weit rechts von der Mitte.

Entsprechend dem üblicherweise geltenden Stand der Technik, strebt in diesem Beispiel nun die Zusatzachse wieder der mittleren Position zu - für weitere Beschleunigungsabschnitte in eine der beiden Richtungen. Dazu muss die Basisachse noch weiter beschleunigen, um bezüglich der Gesamtbewegung eine neutrale Bewegung der Zusatzachsen, zurück zur Mitte, zu ermöglichen. (siehe auch den bisherigen Stand der Technik hierzu - z.B. EP 1 294 544 B1) Angenommen sei weiter, dass die Bewegung 10mm vor dem äußersten erreichbaren rechten Rand, also auf Position +490mm, stoppen soll.

Würde nun die Zusatzachse mit angenommenem Spielraum von 100mm in ihrer neutralen Ausgangsposition verharren, wäre diese Position 40mm außerhalb der regulären Erreichbarkeit. Die Bewegung wäre also nicht regulär ausführbar.

Erfindungsgemäß verschiebt nun aber die Steuerung den neutralen Ausgangspunkt der Zusatzachse immer weiter zu ihrem rechten Rand hin, genau entgegengesetzt zu dem Anteil, der von der Bewegung der Basisachse abgezogen wird, um eine Verletzung ihrer eigenen Bereichsgrenze zu vermeiden, was sich hier als ein Abbremsen der Basisachse auswirkt.

Kurz bevor die Gesamtbewegung den geplanten Haltepunkt erreicht, bewegt sich die Zusatzachse schon mit der Sollgeschwindigkeit, die sie nun allein übernimmt, auf ihren rechten Rand zu, wobei die Basisachse inzwischen schon in ihrer Endposition steht.

Schließlich bremst die Zusatzachse passend auf den Punkt ab.

Da sich die Basisachse in diesem Beispiel 40mm weniger weit nach rechts bewegt hat, als sie dies ohne die erfindungsgemäße Abbremsung getan hätte (wenn es physisch möglich wäre) ist nun entsprechend der neutrale Ausgangspunkt der Zusatzachse um 40mm nach rechts verschoben, also 10mm vom eigenen rechten Rand entfernt.

Entsprechend kommt es nun auch nicht zu einer Ausgleichsbewegung, entsprechend dem früheren Stand der Technik.

Vorzugsweise erreicht entsprechend die besagte Verschiebung des neutralen Ausgangspunktes im wesentlichen genau dann den besagten Rand des Bewegungsspielraumes der Zusatzachse, wenn die Gesamtbewegung den entsprechenden Rand des Arbeitsraumes in der jeweiligen Gesamtachse erreicht hat.

Diese Verschiebung ist deshalb ohne Beeinträchtigung der sonstigen auszuführenden Bewegung möglich, da eine weitere hoch beschleunigte Bewegung über die Grenzen eines Arbeitraumes weder möglich noch notwendig ist, weshalb kein weiterer Raum für einen hoch beschleunigten Vorlauf der Zusatzachsen verbleiben muss.

Zu beachten ist, ähnlich wie bei schon bekannten Verfahren zur Bewegungskoordination von redundanten translatorisch wirksamen Achsen, dass es einen Zusammenhang zwischen der maximalen mit diesem Verfahren nutzbaren Bewegungsgeschwindigkeit (Vbmax), der Beschleunigungsfähigkeit der Basisachsen (Bb) und der Länge des Bewegungsspielraumes der Zusatzachsen (Sz) gibt.

Eine nähere Betrachtung dieses Zusammenhangs zeigt jedoch, dass bei nahezu jedem erfindungsgemäß ergänzbaren Verfahren, sich völlig zwanglos ergibt, dass die Maximalwerte von Vbmax und Minimalwerte von Sz und Bb, die sich schon durch die Voraussetzung der kontinuierlich möglichen Verwendung der Zusatzachse mit ihrer jeweiligen Beschleunigung ergeben, die Möglichkeit des Einsatzes eines erfindungsgemäßen Verfahrens, bis zu diesen Grenzwerten, mit einschließt.

Bei noch höheren Bewegungsgeschwindigkeiten sind wiederum, auch schon bei vorbekannten Verfahren, Vorkehrungen notwendig um nicht mehr exakt steuerbare diskontinuierliche Bewegungsabläufe zu vermeiden, die sich üblicherweise ebenfalls transparent, also ohne besondere Berücksichtigung, mit dem erfindungsgemäßen Verfahren kombinieren lassen.

Auf Ausnahmen hiervon kommt der Text im folgenden noch einmal zurück.

Bei jeder mit einer redundant translatorisch wirksamen Achsanordnung arbeitenden Maschine wird an irgendeinem Punkt der Steuerung oder Regelung die Aufteilung der Sollvorgaben für die redundant wirkenden Teilachsen stattfinden.

Dies kann beispielsweise nach einer Aufteilung in verschieden hoch beschleunigte Komponenten einer Bewegung (Bkb, Bkz) aus einer Steuerung heraus stattfinden, wie dies vorzugsweise in den zum Stand der Technik beschriebenen Beispielen des Anmelders der vorliegenden Erfindung dargestellt wird.

Um eine erfindungsgemäße Veränderung der Bewegung einer Basisachse und die entsprechende Verschiebung der neutralen Ausgangsposition einer redundant wirksamen Zusatzachse zu erreichen, werden in solchen Konfigurationen vorzugsweise die zur besagten Veränderung und Verschiebung notwendigen Positionierungsdaten den entsprechenden Bewegungskomponenten (Bkb, Bkz) an dieser Stelle aufaddiert, wobei sich diese zusätzlich aufzuaddierenden Daten für beide Bewegungskomponenten exakt kompensieren, so dass die resultierende Bewegung einer Messeinrichtung oder eines Werkzeuges, gegenüber einem Mess- oder Bearbeitungsgut, hiervon nicht beeinflußt wird.

Je nach den Details der jeweils verwendeten Koordinationsmethode für die eigentlichen Mess- oder Bearbeitungsbahnen, sind ggf. neben den Positionsdaten auch Geschwindigkeits- und Beschleunigungsdaten anzupassen.

Grundsätzlich kann das erfindungsgemäße Verfahren auch mittels einem der eigentlichen Steuerung nachgeschalteten Regelkreises realisiert sein, wenn die Möglichkeit besteht, entsprechend der schon beschriebenen Positionsbedingungen, passende Signale zur Verschiebung des Nullpunktes der Zusatzachse in den entsprechenden Regelkreis einzuspeisen.

Siehe hierzu als Beispiel EP 1 688 807 A1 (Scholich-Tessmann)

Fig.6 Anschluß 61, Beschreibung Absätze [9],[10],[40], Ansprüche 4 und 11. Wenn dort auch an eine andere Nutzung des sogenannten Nachlaufoffset gedacht ist, so wäre dies doch eine beispielhafte Möglichkeit, für eine erfindungsgemäße Veränderung der Bewegung einer Basisachse und der entsprechenden kompensierenden Verschiebung des inneren Nullpunktes einer redundant wirksamen Zusatzachse, mittels eines Regelkreises.

Da üblicherweise bei einer im wesentlichen positionsabhängigen Aktivierung oder Ausführung von verfahrensbedingten Funktionsabläufen, bei einer Mess- oder Werkzeugmaschine, von den Daten des vorhandenen Positionierungssystems ausgegangen wird, handelt es sich, bezüglich des jeweiligen Gesamtkoordinationsverfahrens, bei den Grenzwerten des Arbeitsraumes, gewöhnlich um passend eingegebene oder voreingestellte Werte in einer Datenverarbeitungseinrichtung, also vorzugsweise einer CNC-Steuerung. Derartige Werte lassen sich im Prinzip beliebig setzen, so dass auch jeder andere beliebige n-dimensionale Ausschnitt des physischen Arbeitraumes als Begrenzung definiert werden kann, wobei (n) für die Anzahl der redundant translatorisch wirksamen Achskombinationen steht.

Dies bietet die Möglichkeit, die entsprechenden erfindungsgemäßen Eigenschaften des Verfahrens, für beliebige besagte Ausschnitte des Arbeitsraumes wirksam werden zu lassen, so dass beispielsweise ein solcher Ausschnitt auch passend zu einer bestimmten separaten Bewegungsbahn oder Teilkontur gesetzt werden kann.

Dies würde dann eine entsprechende Einschränkung der Bewegung aller beteiligten Achsen bewirken, als ob dieser Ausschnitt die physische Grenze der Bewegungsmöglichkeiten darstellt.

Der wichtigste Vorteil einer derartigen Vorgehensweise liegt in der Tatsache begründet, dass somit der Bewegungsanteil der meist relativ trägen betroffenen Basisachsen auf das minimal notwendige Maß begrenzt wird, ohne die Bewegungsdynamik einzuschränken, soweit die abzufahrende Bewegungsbahn innerhalb dieser Grenzen bleibt.

Sollte ein derart definierter temporärer Arbeitsraum in einer Achsrichtung so klein sein, dass sich nach den bisher angenommenen Regeln eine Verschiebung des inneren Nullpunktes in beide Richtungen ergeben könnte, so ist vorzugsweise die Entfernung zu dem Rand ausschlaggebend, der sich näher an der aktuellen Sollposition befindet.

Ist der Abstand gleich oder mindestens nahezu gleich, entscheidet vorzugsweise entweder die aktuelle Bewegungsrichtung oder der innere Nullpunkt der besagten Zusatzachse wird auf eine mittlere Position verschoben.

Der innere Nullpunkt einer Zusatzachse wird auch dann vorzugsweise auf eine mittlere Position verschoben, wenn der besagte temporäre Arbeitsraum, in der jeweiligen Achsrichtung, innerhalb des Bewegungsbereiches der jeweiligen Zusatzachse Platz findet.

Insbesondere ist dies alles von Vorteil, wenn der besagte Ausschnitt eine Reihe von kleineren separat ausführbaren Bahnabschnitten umfasst, so dass auch der Streckenanteil der Basisachsen an den Positionierungsbewegungen, und damit deren Zeitanteil und Geschwindigkeit zwischen den Abschnitten minimiert wird.

Wenn die Grenzen aller separierbaren Bahnabschnitte festgestellt und in einer entsprechenden Datenstruktur abgelegt werden, wie schon aus dem Stand der Technik bekannt, können mit minimalem Rechen- und Zeitaufwand die gemeinsamen Grenzen einer beliebigen Gruppe hiervon ermittelt und als besagte Werte zur Begrenzung eines jeweils passenden temporären Arbeitsraumes gesetzt werden.

Wenn diese Gruppe und die resultierenden Grenzen derart laufend aktualisiert werden, dass gerade die Abschnitte deren Abarbeitung unmittelbar bevorsteht, für einen gewissen Zeitraum im Voraus, in die Gruppe aufgenommen werden und die schon abgearbeiteten Abschnitte wieder ausscheiden, so ergibt sich eine ständig aktualisierte Anpassung des temporären Arbeitsraumes und somit eine relativ niedrig beschleunigte und minimierte Anpassungsbewegung der Basisachsen, wobei sich für die Zusatzachsen immer die optimale Ausgangsposition für einen möglichst großen und hoch beschleunigten Bewegungsanteil ergibt.

Dieses Verfahren ist auch dann vorteilhaft gegenüber dem Stand der Technik anwendbar, wenn sonst keine synchrone redundant wirksame Aufteilung der Bewegungsbahn zur Ausführung von Messungen oder Bearbeitungen zwischen den Basis- und Zusatzachsen stattfindet, sondern lediglich eine erfindungsgemäße Anpassung der Position der Basisachsen und eine entsprechenden Kompensation der Zusatzachsen hierzu, entsprechend an sich laufend aktualisierenden Grenzwerte eines temporären Arbeitsraums stattfindet, was sich derart auswirkt, dass oft größere Bereiche von eng beieinander stehenden kleineren Teilkonturen abgearbeitet werden können, ohne dass Pausen durch ein zeitlich getrenntes Umpositionieren der Basisachsen entstehen.

Auch die schon zum Stand der Technik erwähnten Maschinen und Verfahren 1 und 2, des Anmelders der vorliegenden Erfindung können durch die Kombination mit dem vorliegenden Verfahren nochmals optimiert werden: Eine von vornherein für das Verfahren 1 optimierte Maschine, mit besonders hohen Geschwindigkeiten der Zusatzachsen, kann diese für schnelle Positionswechsel optimal nutzen, da sich die separaten Bahnabschnitte und Teilkonturen häufiger in Reichweite der Zusatzachsen befinden. Vom gleichen Vorteil kann auch Verfahren 2 profitieren, wobei aus dem gleichen Grund die Beschleunigung der Zusatzachsen weniger häufig eingeschränkt werden muss, da unnötige überlagerte Bewegungen von Basis- und Zusatzachse besser vermieden werden, als ohne das vorliegende Verfahren.

Sinnvoll ist es in jedem Fall, die zusätzliche Anwendbarkeit schon bekannter und üblicher Verfahren, die auch zur Optimierung der Effizienz von konventionellen Maschinen, ohne Zusatzachsen, verwendbar sind, beispielsweise zur Bestimmung der Reihenfolge von separaten Bahnabschnitten oder Teil konturen in der Arbeitsvorbereitung, zu prüfen und ggf. einzusetzen und dabei wenn möglich, zu beachten, dass die abzuarbeitenden Teilkonturen quer zur kürzesten Zusatzachse ausgerichtet sind, da dies insgesamt weitere Maßnahmen sind, die für die Effizienz des erfindungsgemäßen Verfahrens zusätzlich günstige Voraussetzungen schaffen können.

Bei der gleichzeitigen Verwendung von Verfahren zur Verbesserung der Bewegungskoordination bei Maschinen mit redundant translatorisch wirksamen Achsen sollten einige Grundsätze beachtet werden, um eine besonders hohe Gesamteffizienz zu erzielen und kontraproduktive Effekte zu vermeiden:

Soll das schon erwähnte Verfahren 1 zusammen mit der vorliegenden Erfindung zur Anwendung kommen, so reicht es grundsätzlich aus, wenn positionsparallel jeweils die Daten zu den inneren Positionen der redundant wirkenden Teilachsen und der jeweiligen Nullpunktverschiebungen für die nachfolgenden Steuerungsund/oder Regelstufen zur Verfügung stehen, da die erfindungsgemäße innere Nullpunktverschiebung lediglich den jeweils temporär nutzbaren Bewegungsspielraum der Zusatzachsen bedarfsgerecht optimiert und gegenüber den eigentlichen Sollpositionsdaten der jeweiligen Messung oder Bearbeitung transparent ist. Nicht ganz so unproblematisch gilt dies jedoch in Bezug auf Geschwindigkeiten und Beschleunigungen, da die für Nullpunktverschiebungen selbst notwendige innere Bewegung jeder Teilachse, diese ja zugleich auch schon entsprechend beansprucht und zusammen mit den Solldaten zur eigentlichen Bewegung zwischen Messeinrichtung oder Werkzeug und Mess- oder Bearbeitungsgut, eine Überschreitung von Grenzwerten zu vermeiden ist. Da jedoch wiederum die höchste erfindungsgemäß bedingte Beanspruchung der Basisachsen immer entgegengesetzt zur durch den Sollweg bedingten Beanspruchung wirkt - siehe auch das Beispiel eingangs der Beschreibung - also tendenziell sogar als Entlastung oder aber zeitliche Vorwegnahme wirkt - ist dies vernachlässigbar.

Entsprechend muss jedoch die Zusatzachse in einigen Situationen einen zusätzlichen Bewegungsanteil bewältigen und ihr Beschleunigungspotential wird temporär entsprechend reduziert, ohne dass jedoch die bisher gültigen maximal erforderlichen Geschwindigkeiten überschritten werden. "Worst case" wäre hier eine Situation in der positionsbedingt einerseits eine erfindungsgemäße Annäherung der Zusatzachse an den Rand eines Arbeitsraumes gerade beginnt wirksam zu werden und parallel dazu immer wieder kurze Sollbahnabschnitte in die gleiche Richtung, und gleich wieder entgegengesetzt, weisen. Am einfachsten zu berücksichtigen ist dies, indem analog der Situation, einer durch die jeweilige Basisachse getragenen Zusatzachse, einfach der zur Kompensation der Basisachse benötigte Beschleunigungsanteil generell von der Beschleunigungsmöglichkeit der Zusatzachse abgezogen und dies in den entsprechenden Maschinendaten einer Steuerung und/oder Regelung, bzw. bei vorab oder im Prozess durchgeführten Simulationsrechnungen und ähnlichem, berücksichtigt wird.

Die Regel wirkt hier aber umgekehrt, wie bezüglich einer Bewegung auf Sollpositionen :

Eine getragene Zusatzachse benötigt hier keine zusätzliche Absolutbeschleunigung, eine der Basisachse gegenüberstehende Zusatzachse dagegen sehr wohl.

Dies ist jedoch weiter zu differenzieren, wegen der relativen Beschleunigung, die in jedem Fall, und im Detail abhängig vom jeweiligen Antriebssystem der Zusatzachse, zu berücksichtigen ist.

Beispielsweise müsste bei einer getragenen Zusatzachse, ein Tauchspulenantrieb lediglich die reibungsbedingten Kraftanteile zur Kompensation einer erfindungsgemäßen Bewegung der Basisachsen (zusätzlich zum Anteil der Sollbewegung) kompensieren, während bei einer Kugelgewindespindel alle rotierenden Massen, auch bei einer "inneren" Bewegung, entsprechend beschleunigt werden müssen.

Da die jeweilige Beschleunigungsmöglichkeit der Zusatzachse meist um eine Größenordnung höher sein wird, als die der zugehörigen Basisachse, ist dies aber gewöhnlich ohne merkliche Nachteile für die Gesamteffizienz durchführbar.

Andererseits ist es auch nicht zwingend notwendig, von einem exakt konstanten Beschleunigungswert für die Zusatzachsen auszugehen, so dass in allen genannten Schritten auch die jeweils positionsabhängig maximal möglichen Werte verwendet werden können, soweit die jeweilige Art der Steuerung oder Vorverarbeitung eine jeweils aktualisierte Einstellung oder Berücksichtigung der Beschleunigung zulässt.

Ein anderes Problem tritt auf, wenn entsprechend einer Weiterbildung des besagten Verfahrens 1 auch schon eine geschwindigkeitsabhängige Verschiebung des inneren Nullpunktes einer Zusatzachse berücksichtigt wird.

In diesem Fall hat man es mit zwei konkurrierenden Einstellungen zu tun, die nicht ohne weiteres zugleich effizient wirksam werden können.

Wird das erste in der Beschreibung behandelte Beispiel nun derart abgewandelt, dass sich auch aus der Geschwindigkeit schon eine Nullpunktverschiebung ergibt, so könnte nun die Zusatzachse, durch Bewegung der Basisachse, schon in einer Stellung in Richtung des Randes unterwegs sein, die überhaupt keine weitere Anpassung mehr erlaubt, mit dem Ergebnis, dass ein Bremsen der Basisachse bei Überschreiten der erfindungsgemäßen Grenzen zum Rand hin, nicht mehr durch die Zusatzachse kompensiert werden kann, so dass entweder die Beschleunigungsmöglichkeiten der Basisachse für die weiteren Bewegungen in diesem Bereich bestimmend werden, oder es zu einem regelrechten "Crash" käme.

Das bedeutet: Schon bevor die Zusatzachse in die Randzone eintritt, in der mit ihrer Hilfe eine Kompensation notwendig ist, muss der Bewegungsspielraum für diese Kompensation vorhanden sein.

Dies widerspricht allerdings der Intention mittels geschwindigkeitsabhängiger Verschiebung des inneren Nullpunktes der Zusatzachse, einen möglichst langen "Aufholweg" für die Basisachse in Gegenrichtung zu erzielen.

Grundsätzlich sind zwei relativ einfache Lösungen dieses Konfliktes möglich: Im oberen Sollgeschwindigkeitsbereich der betreffenden Maschine, ab einer Geschwindigkeit, in der ein besagter verlängerter "Aufholweg" (länger als die Hälfte des Bewegungsspielraumes der Zusatzachsen) für die Basisachsen notwendig ist, verkleinert man den Arbeitsraum von den Rändern aus entsprechend und betreibt die Maschine nach dem weitergebildeten Verfahren 1. Unterhalb dieser Geschwindigkeit wird die Maschine dann zusätzlich oder allein gemäß der hier vorliegenden Erfindung betrieben. Alternativ könnte man auch Geschwindigkeitszonen definieren, in der zwischen diesen Betriebsarten ein fließender Übergang stattfindet.

Wichtig ist allerdings anzumerken, dass diese Problematik nur an den physischen Grenzen des Arbeitsraumes einer Maschine auftritt, so dass das weitergebildete erfindungsgemäße Verfahren, beispielsweise innerhalb der oben geschilderten "Hochgeschwindigkeitszone" problemlos anwendbar ist, beispielsweise indem die von beiden Teilverfahren erzeugten inneren Nullpunktverschiebungen einer Zusatzachse addiert und auf den erlaubten Maximalwert abgeschnitten werden. Ein "Überschwingen" der Basisachsen, das im Randbereich, wie beschrieben, nicht erlaubt wäre, schadet hier nicht und die erfindungsgemäßen Vorteile beider Verfahren können somit wirksam werden.

Die Kombination mit dem besagten Verfahren 2 ist sowohl sinnvoll, soweit es darum geht den physischen Arbeitsraum einer Maschine möglichst vollständig zu nutzen und auch als mögliches Referenzverfahren in Verbindung mit einer Weiterbildung von Verfahren 2, in der ein Simulationsvergleich von Verfahren genutzt wird, um zu entscheiden, welche Abschnitte eines Bahnverlaufes mit welchen Verfahrensvarianten abgearbeitet werden.

Die Art der Basisachsen, als auch der Zusatzachsen, von Maschinen die entsprechend der Erfindung betrieben werden, kann mechanisch sehr vielfältig realisiert sein.

Für Basisachsen werden gewöhnlich Linearantriebe, Hohlwellenmotore, Zahnstangentriebe oder Kugelgewindespindeln zum Einsatz kommen, während für die Zusatzachsen, je nach benötigtem Bewegungsspielraum und Größendimension der Anwendung, neben Linearantrieben und möglichst direkt angetriebenen Kugelgewindespindeln auch piezoelektrisch, elektrodynamisch ("voice coils"), hydraulisch oder pneumatisch wirksame Antriebe verwendbar sein können.

Genauso ist auch der Einsatz von um eine Achse drehbarer oder parallelkinematisch bewegbarer Maschinenteile als entsprechend linear wirkende Zusatzachse innerhalb eines passenden Winkelbereiches möglich, wie beispielsweise schwenkbare Laserschneidköpfe oder parallelkinematisch bewegbare Fräsköpfe.

Eine Mess- oder Werkzeugmaschine kann erfindungsgemäß beispielsweise für den Schiff- oder Flugzeugbau zum Vermessen und Bearbeiten größter Bauteile in höchster Detailkomplexität vorteilhaft konzipiert werden, oder für eher alltägliche Dimensionen, beispielsweise in der Größe von Autokarosserien, Waschmaschinen oder Platinen für elektronische Schaltungen, bis hinunter in die Dimensionen von Zentimetern oder Bruchteilen von Millimetern, für die Abmessungen eines zu vermessenden oder zu bearbeitenden Werkstückes in der Mikrosystemtechnik, Mikroelektronik oder der Nanotechnologie.

Die Grundproblematik - die Größe eines möglichst ununterteilten Arbeitsraumes im Verhältnis zu den zu berücksichtigenden Details einerseits und immer höhere Mess- oder Bearbeitungsgeschwindigkeiten, bei nur begrenzt vergrößerbarem Bewegungsspielraum von redundant gegenüber trägen Basisachsen wirksamen agilen Zusatzachsen, andererseits - nimmt tendenziell immer mehr zu und damit zugleich der Bedarf für höchstmögliche konstant verfügbare Beschleunigungen bei möglichst kontinuierlichen Mess- und Bearbeitungsgeschwindigkeit an komplexen Konturen und Strukturen und somit an entsprechend komplexen Bahnkurven.

Dabei ermöglicht die Erfindung eine verbesserte Nutzbarkeit des Arbeitsraumes und/oder die effizientere Abarbeitung von Mess- oder Bearbeitungsbahnen, die zahlreiche relativ kleine und eng beieinander befindliche und separat ausführbare Bahnabschnitte enthalten.

Bearbeitungsmethoden für die sich ein erfindungsgemäßes Verfahren besonders eignet, sind das Schweißen, Schneiden, Fräsen, Gravieren, Markieren, Aufbringen von komplexen Konturen und Strukturen auf eher flachen Materialien, wie Blechen, Kunststoffen, Glas, Keramiken, Holz und Textilien.

Ebenso ist das Rapid Prototyping eine geeignete Anwendung, insbesondere Verfahren in denen Schichten zugeschnitten, Material kleinräumig aufgetragen wird oder mit einem möglichst senkrecht zum Material ausgerichteten Energiestrahl gearbeitet werden muss, beispielsweise um einen möglichst gleichmäßigen und exakt reproduzierbaren Energieeintrag zu erhalten.

Ferner sind das präzise Bearbeiten kleinster Strukturen oder das präzise Auf- und Abtragen feinster Details mit hoher Geschwindigkeit genauso mögliche Anwendungen der vorliegenden Erfindung, wie auch das Messen und Kontrollieren in den genannten Bereichen, wobei diese nur als Beispiele zu verstehen sind und keine in irgend einer Weise abschließende Aufzählung von Anwendungsmöglichkeiten der Erfindung darstellen sollen.

Bevorzugte Ausführungsbeispiele der Erfindung sind in der Zeichnung schematisch dargestellt und werden nachfolgend mit Bezug zu den Figuren der Zeichnung näher erläutert. Es zeigt:
- Fig. 1: eine Werkzeugmaschine mit einem in zwei Achsrichtungen bewegbaren Werkzeug und einer Zusatzachse;
- Fig. 2: eine Werkzeugmaschine mit fünf Achsrichtungen;
- Fig. 3: eine stark schematisierte Darstellung einer Basisachse und Zusatzachse;

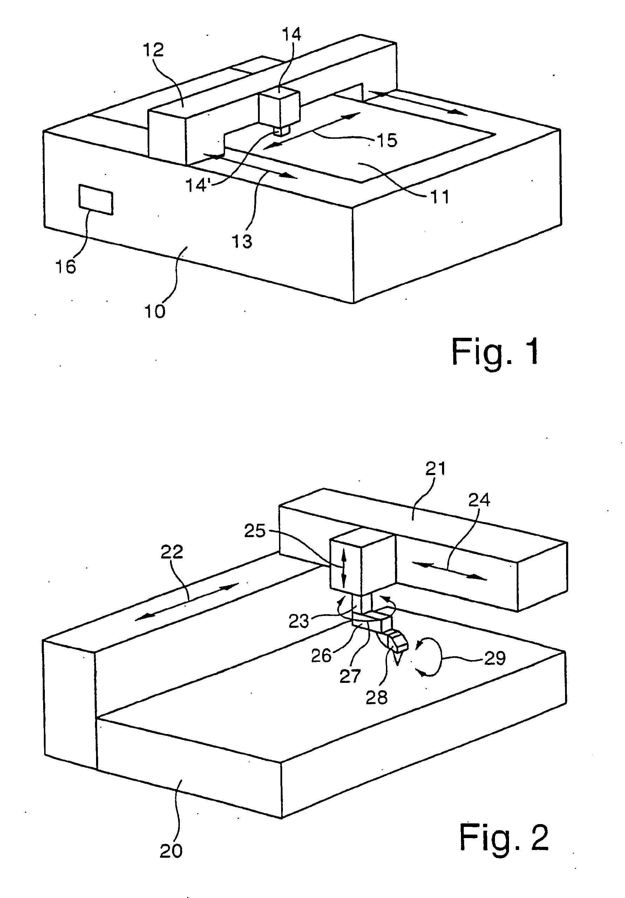

In der Fig. 1 ist eine Werkzeugmaschine 10 dargestellt, bei der ein Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit der Werkzeughalter 14' samt Werkzeug) ist in Achsrichtung 15 bewegbar. Der Werkzeughalter 14' ist bezüglich der Einrichtung 14 ebenfalls in Achsrichtung 13 beweglich.

Aus der Fig. 1 ist ersichtlich, dass der Werkzeughalter 14' (mit Werkzeug) eine geringere Masse aufweist als die Einrichtung 14, die als Schlitten bezeichnet werden kann. Das Portal 12 mit zugehörigen Antrieben stellt eine erste in Ausrichtung 13 wirkende Teilachse dar und wird als Basisachse bezeichnet, während der Werkzeughalter 14' mit zugehörigem Antrieb eine in Achsrichtung 13 wirkende zweite Teilachse, die Zusatzachse, darstellt. Die Basisachse hat einen größeren Bewegungsbereich und geringere Beschleunigung als die Zusatzachse. Die Bewegungen in den Achsenrichtungen 13, 15 werden durch eine Steuerung 16 gesteuert.

In der Fig. 2 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 als Werkzeug angeordnet, der wiederum in Achsrichtung 29 rotierbar ist.

In einem geringen Bewegungsausschnitt ist die Bewegung des Laserschneidkopfes 28 im Wesentlichen parallel zur Achsrichtung 22, so dass eine Bewegung des Kopfes 28 in einem Bereich eine translatorische Bewegung parallel zur Bewegung des Armes 21 in Achsrichtung 22 bewirken kann und daher der Laserschneidkopf 28 samt seinem Antrieb als (translatorische) Zusatzachse betrachtet werden kann.

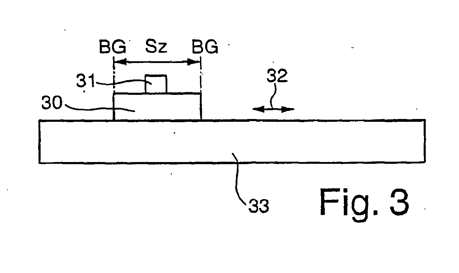

In der Figur 3 ist nochmals stark schematisiert ein Schlitten 30 gezeigt, der relativ zur Führung 33 bewegbar ist und eine Basisachse bzw. einen Bestandteil einer solchen darstellt. Darauf ist eine Einrichtung 31 angeordnet, die eine Zusatzachse bzw. einen Bestandteil einer solchen darstellt. Sowohl der Schlitten 30 als auch die Einrichtung 31 können in Doppelpfeilrichtung 32 beschleunigt werden. Dabei kann der Schlitten 30 relativ zu der Führung 33 mit der Beschleunigung Bb (Beschleunigung der Basisachse) und die Einrichtung 31 relativ zum Schlitten 30 mit der Beschleunigung Bz (Beschleunigung der Zusatzachse) beschleunigt werden. Ein an der Einrichtung 31 befestigtes Werkzeug oder eine Messeinrichtung kann gegenüber einem Werkstück mindestens mit der Beschleunigung Bz beschleunigt werden. Die gestrichelten Linien BG stellen die Bereichsgrenzen des Bewegungsspielraums Sz der Zusatzachse dar.

## Patentansprüche

1. Verfahren zur optimierten Bewegungskoordination von Mess- oder Werkzeugmaschinen (10, 20) mit redundanten translatorisch wirksamen Achsen (15, 14, 22, 24, 25, 27, 29)
wobei die redundanten transitorisch wirksamen Achsen, linear bewegbare Teile (14, 14) einer Gesamtbewegungsvorrichtung, zur mindestens zweidimensionalen Gesamtbewegung von Messeinrichtungen oder Werkzeugen, relativ zu einem mit beliebigen Verfahren abzutastenden oder zu bearbeitenden Mess- oder Bearbeitungsgut bilden,
wobei als redundante translatorische Bewegungsmöglichkeit auch gelten kann, wenn rotatorisch oder parallelkinematisch wirkende Teilbewegungsvorrichtungen (23, 26, 28), innerhalb eines anwendungsabhängig ein Bewegungsbereiches, für eine redundante translatorische Bewegung einer Messeinrichtung oder eines Werkzeuges genutzt werden können,
wobei die jeweils über eine längere Strecke bewegbaren Teilachsen, hier Basisachsen (32) genannt, eine relativ niedrig beschleunigte Teilbewegung, über den gesamten Mess- oder Bearbeitungsraum, ermöglichen und die jeweils über eine kürzere Strecke bewegbaren Teilachsen, hier Zusatzachsen (S_{z}) genannt, die Bewegungsanteile einer Gesamtbewegung ausführen, die eine Beschleunigung jenseits eines für die Basisachsen festgestellten oder festgesetzten Maximums erfordern,
wobei die Gesamtkoordination aller Achsen unmittelbar während eines Messoder Bearbeitungsvorganges stattfinden kann, oder in einer fließenden abschnittweisen Vorverarbeitung während eines Mess- oder Bearbeitungsvorganges, oder als Teil einer kompletten Vorverarbeitung eines gesamten Mess- oder Bearbeitungsvorganges,
und eine Zusatzachse bei Stillstand oder während einer unbeschleunigten Bewegung in der jeweiligen Gesamtachse die Position eines neutralen Ausgangspunktes einnimmt, gewöhnlich in der Mitte ihres Bewegungsspielraumes, wobei besagter neutraler Ausgangspunkt auch als
innerer oder lokaler Nullpunkt der jeweiligen Zusatzachse bezeichnet oder aufgefaßt werden kann, auf den die redundant zu den jeweiligen Basisachsen wirkenden höher beschleunigten Bewegungsanteile einer Gesamtbewegung aufaddiert, die Position einer Zusatzachse in ihrem eigenen Bewegungsspielraum ergibt,
**dadurch gekennzeichnet, daß** bei Anfahren von Positionen, im Rahmen einer Mess- oder Bearbeitungsbahn, die bei jeweils fixierter neutraler Ausgangsposition nicht erreichbar wären, die Basisachsen entsprechend passend abbremsen und auch völlig zum Stillstand kommen können, um eine Verletzung der Grenzen ihres Bewegungsspielraumes zu vermeiden, wobei durch entsprechende gleichzeitige Verschiebung des neutralen Ausgangspunktes der Zusatzachsen, der jeweils zur Gesamtbewegung fehlende Bewegungsanteil der Basisachsen ausgeglichen wird, und somit der Bewegungsspielraum der Basisachsen und der Bewegungsspielraum der jeweils redundant wirksamen Zusatzachsen addiert, den in den jeweiligen Gesamtachsen ununterteilt verfügbaren Arbeitsraum ergeben.

2. Verfahren gemäß Anspruch 1,
**dadurch gekennzeichnet, dass** die besagte Abbremsung einer Basisachse spätestens einsetzt, wenn der Abstand besagter Basisachse vom Rand ihres Bewegungsspielraumes Vb² / 2Bb nahe kommt oder erreicht, wobei Vb für die Geschwindigkeit und Bb für die Beschleunigung jeweils der Basisachse steht.

3. Verfahren gemäß einem der vorhergehenden Ansprüche,
**dadurch gekennzeichnet, dass** die besagte Verschiebung des neutralen Ausgangspunktes im wesentlichen dann den besagten Rand des Bewegungsspielraumes der Zusatzachse erreicht, wenn die Gesamtbewegung den entsprechenden Rand des Arbeitsraumes in der jeweiligen Gesamtachse erreicht.

4. Verfahren gemäß einem der vorhergehenden Ansprüche,
**dadurch gekennzeichnet, dass** die sich ausgleichenden Bewegungskomponenten in einer Steuerung oder Vorverarbeitung, Positions-, Geschwindigkeits-, und Beschleunigungsdaten oder -signale umfassen können,

5. Verfahren gemäß Anspruch 4,
**dadurch gekennzeichnet, dass** die besagten Bewegungskomponenten den jeweiligen Steuerungsausgangsdaten- oder -signalen hinzuaddiert werden und somit zur gesteuerten Bewegungsvorrichtung hin keine separaten Ausgänge für diese Bewegungskomponenten vorgesehen sind.

6. Verfahren gemäß Anspruch 4,
**dadurch gekennzeichnet, dass** die besagten Bewegungskomponenten über separate Datenausgänge oder Signale einer gesteuerten Bewegungsvorrichtung zugeführt werden, so dass eine Berücksichtigung dieser Bewegungskomponenten über speziell hierfür vorgesehene Einrichtungen der Bewegungsvorrichtung erfolgt.

7. Verfahren gemäß einem der vorhergehenden Ansprüche,
**dadurch gekennzeichnet, dass** die Grenzen des Arbeitsraumes der besagten Gesamtbewegungsvorrichtung beliebig innerhalb des Rahmens ihrer addierten physischen Bewegungsspielräume in jeder Gesamtachse,
und auch die Grenzen des Bewegungsspielraumes jeder Basisachse eingestellt werden können,
und diese Grenzen während einer Messung oder Bearbeitung veränderbar sind.

8. Verfahren gemäß Anspruch 7,
**dadurch gekennzeichnet, dass** mit dem Einstellen der besagten Grenzen des Arbeitsraumes, die einstellbaren Grenzen des Bewegungsspielraumes der Basisachsen automatisch derart eingestellt werden,
dass sie im wesentlichen mittig zwischen den besagten eingestellten Grenzen des Arbeitsraumes angeordnet sind, mit dessen Breite abzüglich des Bewegungsspielraumes der jeweiligen redundant wirksamen Zusatzachsen.

9. Verfahren gemäß Ansprüchen 7 oder 8,
**dadurch gekennzeichnet, dass** die geometrischen Grenzen von separat ausführbaren
Bewegungsabschnitten datentechnisch ermittelt und bezüglich einer Gesamtmessung oder -bearbeitung in einer Liste in ihrer Reihenfolge abgelegt werden, und aus beliebigen Listenabschnitten gemeinsame geometrische Grenzwerte gebildet und temporär als besagte Grenzen des Arbeitsraumes eingestellt werden.

10. Verfahren gemäß Anspruch 9,
**dadurch gekennzeichnet, dass** die besagten Listenabschnitte bei dem Listeneintrag beginnen, dessen zugehöriger Bahnabschnitt aktuell ausgeführt wird und einen oder mehrere unmittelbar folgende Listeneinträge umfasst, wobei nach jedem Abschluss eines separaten Bahnabschnittes, der Listenabschnitt
entsprechend in der Liste verschoben wird.
und aus diesem Listenabschnitt gemeinsame geometrische Grenzwerte gebildet und temporär als besagte Grenzen des Arbeitsraumes eingestellt werden.

## Claims

1. A method for the optimised movement co-ordination of measuring machines or machine tools (10, 20) having redundant axes (15, 14, 22, 24, 25, 27, 29) having a translatory action,
wherein the redundant axes having a translatory action form linearly movable parts (14, 14') of a total movement device, for at least two-dimensional total movement of measuring devices or tools relative to a material to be scanned or to be processed with any desired methods,
wherein a possible redundant translatory movement is also considered to be when rotatory or parallel kinematically acting partial movement devices (23, 26, 28), within an application-dependent movement range, can be used for a redundant translatory movement of a measuring device or a tool,
wherein the partial axes each movable over a relatively long distance, called base axes (32) here, permit a relatively slowly accelerated partial movement across the entire measuring or processing space, and the partial axes each movable over a relatively short distance, called additional axes (Sz) here, perform the movement components of a total movement, which require an acceleration beyond a maximum established or stipulated for the base axes,
wherein the overall co-ordination of all axes can take place directly during a measuring or processing operation, or in a smooth section-wise pre-processing during a measuring or processing operation, or as part of a complete pre-processing of an entire measuring or processing operation,
and, at standstill or during an unaccelerated movement in the particular overall axis, an additional axis assumes the position of a neutral starting point, usually in the middle of its movement range, wherein said neutral starting point can also be called or understood as the inner or local zero point of the particular additional axis, to which the higher accelerated movement components of a total movement acting redundantly with respect to the particular base axes are added, and produces the position of an additional axis in its own movement range,
**characterised in that** when approaching positions, within the limits of a measuring or processing path, which would not be achievable in the case of a fixed neutral starting position, the base axes decelerate correspondingly appropriately and can even come to a complete standstill in order to avoid breaching the boundaries of their working range, wherein by corresponding simultaneous displacement of the neutral starting point of the additional axes, the movement component of the base axes missing from the total movement in each case is compensated, and thus the movement range of the base axes and the movement range of the respective redundantly active additional axes, added, produce the undivided working space available in the particular overall axes.

2. A method according to claim 1,
**characterised in that** the said deceleration of a base axis commences at the latest when the distance of the said base axis from the edge of its movement range approaches or reaches Vb²/2Bb, where Vb stands for the speed and Bb stands for the acceleration each time of the base axis.

3. A method according to any one of the preceding claims,
**characterised in that** the said displacement of the neutral starting point reaches substantially the said edge of the movement range of the additional axis when the total movement reaches the corresponding edge of the working space in the particular overall axis.

4. A method according to any one of the preceding claims,
**characterised in that** the movement components balancing each other out in a control or pre-processing can comprise position, speed and acceleration data or signals.

5. A method according to claim 4,
**characterised in that** the said movement components are added to the particular control output data or signals and thus towards the controlled movement device, no separate outputs for these movement components are provided.

6. A method according to claim 4,
**characterised in that** the said movement components are fed via separate data outputs or signals to a controlled movement device, so that consideration of these movement components is effected via arrangements of the movement device that are specifically provided for that purpose.

7. A method according to any one of the preceding claims,
**characterised in that** the boundaries of the working space of the said total movement device can be adjusted as desired within the limits of its added physical movement ranges in each overall axis and also the boundaries of the movement range of each base axis can be adjusted and these boundaries are alterable during a measurement or processing.

8. A method according to claim 7,
**characterised in that** with the setting up of the said boundaries of the working space, the adjustable boundaries of the movement range of the base axes are automatically adjusted in such a way that they are arranged substantially centrally between the said adjusted boundaries of the working space, with the width thereof less the movement range of the particular redundantly active additional axes.

9. A method according to claim 7 or 8,
**characterised in that** the geometric boundaries of separately executable movement sections are determined by data technology and in respect of a total measurement or processing are stored in a list in their sequence, and from arbitrary list sections common geometric limit values are formed and set temporarily as said boundaries of the working space.

10. A method according to claim 9,
**characterised in that** the said list sections begin at the list entry whose associated path section is currently being executed and includes one or more immediately following list entries, wherein after each completion of a separate path section the list section is correspondingly displaced in the list, and from this list section common geometric limit values are formed and set temporarily as said boundaries of the working space.

## Revendications

1. Procédé destiné à optimiser la coordination de mouvements d'appareils de mesure ou de machines-outils (10, 20) au moyen d'axes de translation redondants (15, 14, 22, 24, 25,27,29)
dans lequel les axes de translation redondants forment des parties mobiles linéairement (14, 14') d'un dispositif de mouvement global, pour le mouvement global au moins bidimensionnel de dispositifs de mesure ou d'outils par rapport à un objet mesuré ou usiné à analyser ou à usiner avec des procédés quelconques,
dans lequel il peut aussi être considéré comme une possibilité de mouvement de translation redondant que des dispositifs de mouvement partiel rotatifs ou à cinématique parallèle (23, 26, 29) puissent être utilisés, à l'intérieur d'une plage de mouvement dépendante de l'application, pour un mouvement de translation redondant d'un dispositif de mesure ou d'un outil,
dans lequel les axes partiels mobiles sur une distance plus longue, appelés ici axes de base (32), permettent un mouvement partiel à relativement faible accélération dans l'ensemble de l'espace de mesure ou d'usinage et les axes partiels mobiles sur une distance plus courte, appelés ici axes supplémentaires (S_{z}), exécutent essentiellement les composantes de mouvement d'un mouvement global qui exigent une accélération allant au-delà d'un maximum constaté ou défini pour les axes de base,
la coordination d'ensemble de tous les axes pouvant avoir lieu directement pendant une opération de mesure ou d'usinage, ou lors d'un prétraitement par étapes continu pendant une opération de mesure ou d'usinage, ou comme partie d'un prétraitement complet d'une opération globale de mesure ou d'usinage,
et un axe supplémentaire prenant, à l'arrêt ou pendant un mouvement non accéléré sur l'axe global respectif, la position d'un point de départ neutre, habituellement au centre de sa plage de mouvement, ledit point de départ neutre pouvant aussi être qualifié de ou conçu comme point zéro intérieur ou local de l'axe supplémentaire respectif, auquel l'addition des composantes de mouvement plus fortement accélérées d'un mouvement global, redondantes par rapport aux axes de base respectifs, donne la position d'un axe supplémentaire dans sa propre plage de mouvement,
**caractérisé en ce que** lorsque sont atteintes, dans le cadre d'une trajectoire de mesure ou d'usinage, des positions qui ne seraient pas atteignables avec une position de départ neutre fixée, les axes de base peuvent ralentir d'une manière appropriée correspondante et même s'immobiliser complètement pour éviter une violation des limites de leur plage de mouvement, la composante de mouvement des axes de base qui manque au mouvement global étant compensée par déplacement simultané correspondant du point de départ neutre des axes supplémentaires, et l'addition de la plage de mouvement des axes de base et de la plage de mouvement des axes supplémentaires redondants respectifs donnant l'espace de travail disponible de manière non divisée sur les axes globaux respectifs.

2. Procédé selon la revendication 1,
**caractérisé en ce que** ledit ralentissement d'un axe de base intervient au plus tard quand la distance dudit axe de base par rapport au bord de sa plage de mouvement s'approche de ou atteint Vb² /2Bb, Vb représentant la vitesse et Bb l'accélération de l'axe de base respectif.

3. Procédé selon une des revendications précédentes,
**caractérisé en ce que** ledit déplacement du point de départ neutre atteint essentiellement ledit bord de la plage de mouvement de l'axe supplémentaire lorsque le mouvement global atteint le bord correspondant de l'espace de travail sur l'axe global respectif.

4. Procédé selon une des revendications précédentes,
**caractérisé en ce que** les composantes de mouvement qui se compensent peuvent comprendre des données ou des signaux de position, de vitesse et d'accélération dans une commande ou un prétraitement.

5. Procédé selon la revendication 4,
**caractérisé en ce que** lesdites composantes de mouvement sont additionnées aux données ou signaux de sortie de commande respectifs et qu'il n'est par conséquent pas prévu de sorties séparées pour ces composantes de mouvement en direction du dispositif de mouvement commandé.

6. Procédé selon la revendication 4,
**caractérisé en ce que** lesdites composantes de mouvement sont amenées à un dispositif de mouvement commandé via des sorties de données ou des signaux séparés, de sorte qu'il est tenu compte de ces composantes de mouvement par des équipements spécialement conçus à cet effet du dispositif de mouvement.

7. Procédé selon une des revendications précédentes,
**caractérisé en ce que** les limites de l'espace de travail dudit dispositif de mouvement global peuvent être réglées à volonté à l'intérieur du cadre de leurs plages de mouvement physiques additionnées sur chaque axe global, de même que les limites de la plage de mouvement de chaque axe de base,
et ces limites sont modifiables pendant une mesure ou un usinage.

8. Procédé selon la revendication 7,
**caractérisé en ce que** lors du réglage desdites limites de l'espace de travail, les limites réglables de la plage de mouvement des axes de base sont automatiquement réglées de façon qu'elles soient essentiellement centrées entre lesdites limites réglées de l'espace de travail, la plage de mouvement des axes supplémentaires redondants respectifs venant en déduction de sa largeur.

9. Procédé selon la revendication 7 ou 8,
**caractérisé en ce que** les limites géométriques de portions de mouvement exécutables séparément sont déterminées informatiquement et enregistrées dans leur ordre dans une liste concernant une mesure ou un usinage global(e), et des valeurs limites géométriques communes sont formées à partir de portions quelconques de la liste et réglées temporairement en tant que lesdites limites de l'espace de travail.

10. Procédé selon la revendication 9,
**caractérisé en ce que** lesdites portions de liste commencent à l'entrée de la liste dont la portion de trajectoire associée est actuellement exécutée et comprennent une ou plusieurs entrées de liste immédiatement suivantes, la portion de liste étant déplacée de façon correspondante dans la liste à la fin de chaque portion de trajectoire séparée, et des valeurs limites géométriques communes étant formées à partir de cette portion de liste et réglées temporairement en tant que lesdites limites de l'espace de travail.
